# EUROPÄISCHE PATENTANMELDUNG

(11) **EP 2 088 404 A1**
(43) Veröffentlichungstag der Anmeldung: **12.08.2009**
(21) Anmeldenummer: 08151259.2
(22) Anmeldetag: 11.02.2008
(51) Int. Cl.: G01F 13/00, B65B 1/06, B65B 1/12, B65B 1/30, B65B 3/08, B65B 37/10

(54) **Dosiervorrichtung für pulver- oder pastenförmiges Dosiergut**

(71) Anmelder: Mettler-Toledo AG, 8606 Greifensee (CH)
(72) Erfinder: Lüchinger, Paul, 8610 Uster (CH)

(57) **Zusammenfassung**

Die erfindungsgemässe Dosiervorrichtung, welche für pulver- oder pastenförmiges Dosiergut einsetzbar ist, umfasst ein Gehäuse mit mindestens einem im Gehäuse ausgebildeten Aufnahmeraum zur Aufnahme von Dosiergut. Ferner weist die Dosiervorrichtung mindestens einen, elastisches Material aufweisenden Dosierkopf mit einem Auslass für das Dosiergut auf. Im unbelasteten Zustand, das heisst ohne mechanische Kraft- oder Druckeinwirkung, ist der Auslass gegen aussen dicht abgeschlossen. Bei Belastung durch eine Kraft oder durch einen Druck öffnet sich der Auslass, wobei der Öffnungsgrad belastungsabhängig variiert. Ferner ist im Aufnahmeraum und/oder im Dosierkopf mindestens ein mechanisches Fördermittel und/oder mindestens ein mechanisches Betätigungselement angeordnet, durch welches Fördermittel zur Austragung bestimmtes Dosiergut gegen den Auslass hin förderbar und durch gegen den Auslass hin gefördertes Dosiergut und/oder durch das mindestens eine mechanische Betätigungselement der Auslass öffenbar ist.

## Beschreibung

Die vorliegende Erfindung bezieht sich auf eine Dosiervorrichtung für pulver- oder pastenförmiges Dosiergut.

Solche Dosiervorrichtungen finden insbesondere beim Dosieren kleiner Mengen, beispielsweise toxischer Substanzen, mit hoher Präzision in kleine Zielgefässe Verwendung. Häufig sind solche Zielgefässe auf einer Waage platziert, um die Menge der aus der Dosiervorrichtung ausgetragenen Substanz zu verwiegen, so dass sie anschliessend bestimmungsgemäss weiter verarbeitet werden kann.

In der EP 0 572 976 B1 wird eine Dosiervorrichtung beschrieben, welche ein Gehäuse mit einem Aufnahmeraum für Dosiergut und einen aus elastischem Material bestehenden Dosierkopf aufweist. Der Dosierkopf in der Art eines Babyflaschenschnullers geformt, weist einen schlitzförmigen Auslass auf, welcher von Aussen durch seitliche Kraft- beziehungsweise Druckeinwirkung aus zwei einander gegenüberliegenden Richtungen geöffnet werden kann. Damit bei der Austragung von Dosiergut keine Pulverbrücken entstehen können, können diese Pulverbrücken mit einem nadelförmigen Aktuator zerstört werden.

Die in der EP 0 572 976 B1 offenbarte Dosiervorrichtung hat den Nachteil, dass sie nur für gut fliessfähiges Dosiergut wie Flüssigkeiten, Granulate oder spezielle Pulver mit annähernd kugelförmigen, eine glatte Oberfläche aufweisenden Partikeln geeignet ist. Sobald andere Pulver ausdosiert werden sollen, welche klebrig sind oder die Partikel aufgrund ihrer Form sich ineinander verhaken, nützt auch der Einsatz des Aktuators wenig. Für diese Fälle kann gemäss der Beschreibung in der EP 0 572 976 B1 das Gehäuse der Dosiereinheit auch aus einem elastischen Kunststoff gefertigt sein, welches ebenfalls wie der schlitzförmige Auslass seitlich zusammengedrückt werden kann. Durch das Zusammendrücken wird im Aufnahmeraum das Dosiergut verdrängt und aus dem geöffneten Auslass gedrückt. Bei dieser Austragungsart entsteht insbesondere bei nicht vollständig befülltem Aufnahmeraum ein Überdruck im Aufnahmeraum, da die im Aufnahmeraum vorhandene Luft komprimiert wird. Sobald der Auslass geöffnet wird, treibt die komprimierte Luft das Dosiergut durch die Auslassöffnung. Bei sehr feinem Dosiergut kann dies dazu führen, dass die ausgetragenen Partikel über eine weite Fläche verteilt werden, anstatt in das Zielgefäss zu gelangen. Bei der Verwendung von toxischem Dosiergut besteht abgesehen vom zusätzlichen Reinigungsaufwand die Gefahr, dass das Umfeld der Dosiervorrichtung kontaminiert wird. Zudem kann es durch dieses Verhalten schwierig sein, sehr präzise Dosierungen im Milligramm- oder Mikrogrammbereich zu erreichen, da die Verlustrate infolge Zerstäubens weitgehend zufällig ist. Ferner kann der seitliche Druck auf das Gehäuse auch dazu führen, dass das Dosiergut lediglich verdichtet wird, statt dass es aus der Dosiervorrichtung ausdosiert wird.

Die Aufgabe der vorliegenden Erfindung ist daher, eine Dosiervorrichtung mit einem aus elastischem Material bestehenden Dosierkopf zu schaffen, welche eine präzise und kontaminationssichere Abgabe von Dosiergut ungeachtet dessen Fliessfähigkeit, ermöglicht.

Diese Aufgabe wird durch eine Dosiervorrichtung gemäss dem Anspruch 1 erfüllt. Die erfindungsgemässe Dosiervorrichtung, welche für pulver- oder pastenförmiges Dosiergut einsetzbar ist, umfasst ein Gehäuse mit mindestens einem im Gehäuse ausgebildeten Aufnahmeraum zur Aufnahme von Dosiergut. Ferner weist die Dosiervorrichtung mindestens einen, elastisches Material aufweisenden Dosierkopf mit einem Auslass für das Dosiergut auf. Im unbelasteten Zustand, das heisst ohne mechanische Kraft- oder Druckeinwirkung, ist der Auslass gegen aussen dicht abgeschlossen. Bei Belastung durch eine Kraft oder durch einen Druck öffnet sich der Auslass, wobei der Öffnungsgrad belastungsabhängig variiert. Ferner sind im Aufnahmeraum und/oder im Dosierkopf mindestens ein mechanisches Fördermittel und/oder mindestens ein mechanisches Betätigungselement angeordnet. Durch das Fördermittel ist zur Austragung bestimmtes Dosiergut gegen den Auslass hin förderbar und durch das gegen den Auslass hin geförderte Dosiergut und/oder durch das mindestens eine mechanische Betätigungselement ist der Auslass öffenbar.

Die erfindungsgemässe Dosiervorrichtung zeichnet sich somit dadurch aus, dass im Aufnahmeraum und/oder im Dosierkopf mindestens ein mechanisches Fördermittel angeordnet ist, welches durch seine Form und Funktionsweise dazu geeignet ist, im Aufnahmeraum und/oder im Dosierkopf befindliches Dosiergut gegen den Auslass hin voranzutreiben, so dass sich der Auslass unter der Belastung des vorangetriebenen Dosierguts öffnet und das Dosiergut ausgetragen wird.

Der Auslass ist vorzugsweise im elastischen Material des Dosierkopfs ausgebildet. Dieses elastische Material kann aus einem Material, aber auch aus verschiedenen Materialien, sogenannten Verbundwerkstoffen bestehen. Diese Verbundwerkstoffe können beispielsweise mit Füllstoffen versehene Kunststoffe oder sogar Kunststoff-Metall- Schichtwerkstoffe sein, aber auch verschiedene Kunststoffe mit unterschiedlichen Härtegraden lassen sich zu Verbundwerkstoffen miteinander verbinden. Ferner kann das elastische Material auch Partien mit unterschiedlichen Materialstärken aufweisen. Mittels Verbundwerkstoffen und den Ausgestaltungsmöglichkeiten bezüglich der Materialstärken lässt sich ein Dosierkopf optimal auf die Eigenschaften des Dosiergutes und auf die Dosiervorrichtung abstimmen.

Sofern vorhanden, kann der Auslass aber auch mit Hilfe oder mit Unterstützung des mindestens einen Betätigungselements von Innen geöffnet werden. In diesem Zusammenhang ist mit dem Begriff Innen stets das Innere der Dosiervorrichtung, insbesondere der vom Gehäuse und vom Dosierkopf abgegrenzte Aufnahmeraum zu verstehen. Der Einsatz eines Betätigungselements ist insbesondere dann ein Vorteil, wenn der mittels des Fördermittels auf den Auslass erzeugte Druck aufgrund der Eigenschaften des Dosierguts nicht ausreicht, um den Auslass zu öffnen.

Selbstverständlich kann bei besonders fliessfähigem Dosiergut der Auslass auch nur mit Hilfe des mindestens einen Betätigungselements von Innen geöffnet werden.

Weiterentwickelte Ausführungsformen der erfindungsgemässen Dosiervorrichtung werden in den abhängigen Ansprüchen definiert.

Vorzugsweise ist das mindestens eine mechanische Betätigungselement Teil des mindestens einen Fördermittels. Durch eine geeignete Ausgestaltung des Betätigungselements und des elastischen Dosierkopfs kann auch eine mechanische Kopplung beider Elemente vorhanden sein. Die mechanische Kopplung beider Elemente ermöglicht eine von einer linearen Verschiebung des Betätigungselementes abhängige Zwangssteuerung des Auslassquerschnitts. Durch diese Zwangssteuerung sind der Auslassquerschnitt des Auslasses und damit die Austragungsmenge des Dosiergutes sehr genau steuerbar. So ist beispielsweise bei sehr fliessfähigem Dosiergut denkbar, dass trotz dem aktivierten Fördermittel der Auslass gegen Ende des Dosiervorganges langsam mit Hilfe des Betätigungselements geschlossen wird. Eine mechanische Kopplung kann dadurch erreicht werden, dass beispielsweise das Betätigungselement einen Kopplungsring aufweist, welcher zumindest teilweise von am Dosierkopf ausgebildeten Teilen, beispielsweise Versteifungsrippen, Stege, Vorsprünge, Wulste und dergleichen umfasst wird.

Der Kopplungsring selbst kann unterschiedliche Ausgestaltungen aufweisen, welche den Durchtritt von Dosiergut durch den Auslass unterstützen. Beispielsweise kann der Kopplungsring ein sägezahnartiges oder wellenförmiges Profil aufweisen. Sofern der Kopplungsring zum Dosierkopf drehbar angeordnet ist, wird das Profil des Kopplungsrings beispielsweise durch Stege abgegriffen, wodurch sich oszillierende Bewegungen im Bereich des Auslasses am Dosierkopf erzeugen lassen.

Das mindestens eine im Aufnahmeraum und/oder im Dosierkopf angeordnete mechanische Fördermittel kann beispielsweise einen beweglichen, sich gegenüber dem Dosierkopf drehenden Teil sowie einen ortsfesten Teil umfassen, welche im Folgenden als Rotor und Stator bezeichnet werden.

In einer weiteren Ausführungsform der Dosiervorrichtung umfasst das mechanische Fördermittel einen Innenrotor und einen zum Innenrotor koaxial angeordneten und vorzugsweise gegenläufig drehenden Aussenrotor sowie gegebenenfalls einen Stator.

In den vorgenannten Ausführungsformen, bei denen das mechanische Fördermittel einen Rotor, bzw. einen Innenrotor und einen Aussenrotor umfasst, kann der Rotor, beziehungsweise der Innen- und/oder Aussenrotor eine Förderschnecke aufweisen, oder es können zumindest einzelne Abschnitte als Förderschnecke ausgebildet oder mit Schaufeln bestückt sein. Eine Förderschnecke wird häufig auch als Förderschraube oder archimedische Schraube bezeichnet.

Vorzugsweise ist die Drehachse des Rotors, bzw. des Innen- und/oder des Aussenrotors entlang der Mittellängsachse des Dosierkopfs und/oder des Aufnahmeraums angeordnet.

Damit das mechanische Fördermittel seine Funktion, im Aufnahmeraum und/oder im Dosierkopf befindliches Dosiergut gegen den Auslass hin voranzutreiben, optimal erfüllen kann, wird der Rotor oder auch die Innen/Aussen-Rotorkombination vorteilhafterweise von einem Stator unterstützt. Wenn zum Beispiel der Rotor die Form einer Förderschnecke hat, welche sich in einem zylindrischen Aufnahmeraum mit glatter Innenwand dreht, so besteht die Tendenz, dass sich pappiges oder pastenförmiges Dosiergut in und an der Schnecke ansammelt, mit dieser mitdreht und somit nicht zum Auslass gefördert wird. Der Stator hat die Aufgabe, dieser Tendenz entgegenzuwirken und umfasst dazu geeignete Elemente, die mit der Innenwand fest verbunden oder gegenüber der Innenwand ortsfest angeordnet sind. Beispielsweise kann der Stator mindestens eine Lamelle und/oder mindestens einen Vorsprung aufweisen, welche mit der Innenwand des Aufnahmeraumes und/oder des Dosierkopfs fest verbunden oder zumindest gegenüber der Innenwand ortsfest angeordnet sind. Unter dem Begriff Lamelle sind beispielsweise durch Nuten geschaffene Lamellen, aber auch Rippen, Leitbleche und Stege zu verstehen. Der Begriff Vorsprünge umfasst Ausbuchtungen aller Art, beispielsweise tetraederförmige Vorsprünge oder die Noppen genoppter Oberflächen. Die Lamellen, Vorsprünge oder Noppen können sowohl aus unelastischen als auch aus elastischen Werkstoffen gefertigt sein. Selbstverständlich können die Lamellen, Vorsprünge oder Noppen auch beweglich zur Innenwand angeordnet sein, so dass sich diese in einer Drehrichtung des Rotors an die Innenwand anlegen und in der entgegengesetzten Drehrichtung des Rotors aufrichten.

In einer bevorzugten Ausführungsform der Dosiervorrichtung verläuft die mindestens eine Lamelle in ihrer Längsausdehnung geradlinig und parallel zur Mittellängsachse des Dosierkopfs und/oder des Aufnahmeraumes.

In einer andern vorteilhaften Ausgestaltung ist die mindestens eine Lamelle, einem Innengewinde ähnlich, gewindegangförmig um die Mittellängsachse des Dosierkopfs und/oder des Aufnahmeraums angeordnet, ausgebildet.

Die Auslassöffnung des Dosierkopfes, welche sich wie oben erwähnt unter Kraft-und/oder Druckeinwirkung des Dosierguts öffnet, ist vorteilhafterweise in der Form eines oder mehrerer Schlitze ausgebildet, welche im unbelasteten Zustand geschlossen sind und sich unter Kraft- oder Druckeinwirkung öffnen.

Zum Beispiel können mehrere Schlitze strahlen- oder sternförmig von einem zentralen Schnittpunkt ausgehend angeordnet sein.

Wie bereits weiter oben erwähnt, kann der Dosierkopf Versteifungsrippen aufweisen.

Vorzugsweise ist das Betätigungselement entlang seiner Mittellängsachse (A) linear verschiebbar. Ferner kann eine zusätzliche Schliessfeder in Schliessrichtung des Auslasses auf das Fördermittel einwirken und dadurch das selbstschliessende, elastische Verhalten des Dosierkopfs unterstützen. Ferner kann mittels der Schliessfeder eine höhere Sicherheit gegen unbeabsichtigtes Öffnen des Auslasses erwirkt werden.

Das mechanische Fördermittel kann in seiner Funktion, im Aufnahmeraum und/oder im Dosierkopf befindliches Dosiergut gegen den Auslass hin voranzutreiben, zusätzlich dadurch unterstützt werden, dass der Rotor oder der Innen- und/oder Aussenrotor entlang seiner Drehachse linear verschiebbar ist.

Schliesslich sei noch erwähnt, dass sowohl die Rotation als auch gegebenenfalls die Linearbewegung des Rotors oder des Innen- und/oder Aussenrotors sowohl mit gleichbleibendem als auch mit wechselndem Richtungssinn erfolgen kann. Bei Ausführungen mit Innen- und Aussenrotor besteht zudem die Möglichkeit, dass einer der beiden Rotoren stillgesetzt wird und somit die Funktion des Stators oder eines zusätzlichen Stators erfüllt. Ferner kann der Rotor auch mit einer, der Drehbewegung und/oder Linearbewegung überlagerten Schwingung belegt werden. Dadurch lässt sich ein Ankleben des Dosierguts am Rotor und Stator vermeiden oder zumindest verhindern. Zudem können dadurch auch die Öffnungslippen des Auslasses in Schwingung versetzt werden.

Die Dosiervorrichtung wird im Folgenden anhand von Beispielen und mit Bezugnahme auf die Zeichnungen näher erläutert. Darin zeigen in dreidimensionaler Ansicht:
- Figur 1: eine erfindungsgemässe Dosiervorrichtung im Schnitt mit einem Gehäuse, einem membranförmigen Dosierkopf, einem mechanischen Fördermittel und mit einem mechanischen Betätigungselement;
- Figur 2a: eine erste Ausführungsform eines membranförmigen Dosierkopfs mit einem schlitzförmig ausgebildeten Auslass und mit zwei Versteifungsrippen;
- Figur 2b: eine zweite Ausführungsform eines membranförmigen Dosierkopfs mit einem sternförmig ausgebildeten Auslass und mit drei Versteifungsrippen;
- Figur 3: eine weitere Ausführungsform einer erfindungsgemässen Dosiervorrichtung im Schnitt mit einem Innenrotor und einem Aussenrotor sowie mit einem durch das mechanische Betätigungselement zwangsgesteuerten Auslass; und
- Figur 4: eine dritte Ausführungsform einer erfindungsgemässen Dosiervorrichtung im Schnitt mit einer weiteren Ausgestaltung des mechanischen Fördermittels, aber ohne mechanisches Betätigungselement.

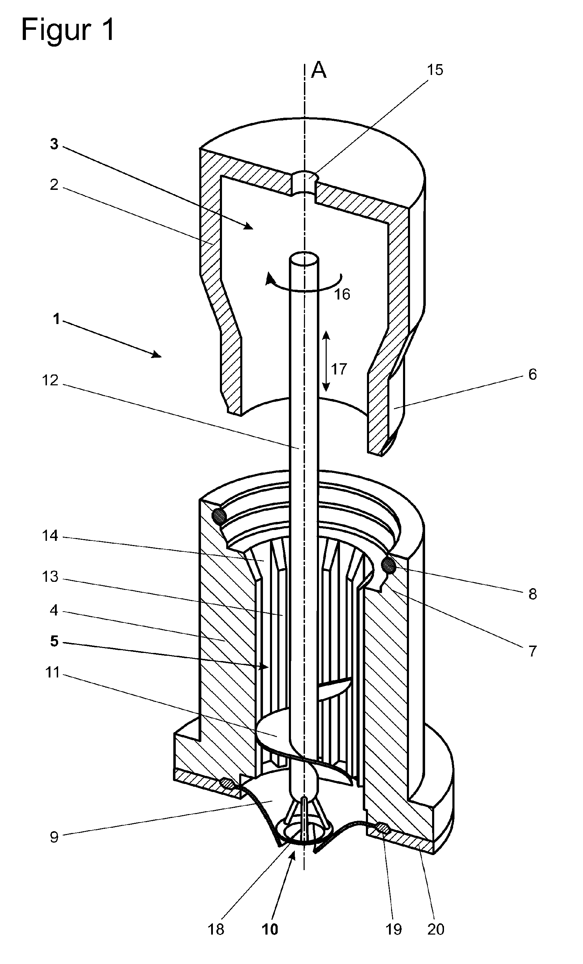

Die in Figur 1 dargestellte Dosiervorrichtung 1 weist ein zweiteiliges Gehäuse, bestehend aus einem Gehäuseoberteil 2 und einem Gehäuseunterteil 4 auf, welche einen entsprechend zweiteiligen Aufnahmeraum 3, 5 zur Aufnahme eines Dosiergutes umschliessen. Damit diese miteinander verbindbar sind, weisen das Gehäuseoberteil 2 und das Gehäuseunterteil 4 schematisch dargestellte Verbindungsbereiche 6 und 7 auf, wobei zwischen den Verbindungsbereichen 6 und 7 eine Dichtung 8 angeordnet ist. An der Unterseite des Gehäuseunterteils 4 ist ein aus elastischem Material bestehender Dosierkopf 9 dicht angeschlossen, welcher einen, geöffnet dargestellten, schlitzförmigen Auslass 10 aufweist. Ausdrücke wie "Oberteil" und "Unterteil" beziehen sich im vorliegenden Zusammenhang immer auf die Lage der Teile zur Schwerkraftrichtung.

Wie Figur 1 zeigt, ist der Dosierkopf 9 als ebene, elastische Membrane ausgestaltet, deren Rand einen umlaufenden Ringwulst 19 aufweist. Dieser Ringwulst ist in einer zwischen dem Gehäuseunterteil 5 und einem Haltering 20 ausgebildeten Ringnut formschlüssig gefangen. Dadurch kann vermieden werden, dass der membranförmige Dosierkopf 9 unter einer Belastung nicht aus seiner Verankerung herausgerissen wird. Ferner kann mittels dieser Ausgestaltung dem membranförmigen Dosierkopf 9 eine gewisse Spannung auferlegt werden, so dass sich der schlitzförmige Auslass 10 nicht bereits unter geringster Belastung, beispielsweise beim Befüllen des unteren Teils des Aufnahmeraums 5 öffnet.

Die Dosiervorrichtung 1 besitzt ein mechanisches Fördermittel mit einem Rotor und einem Stator. Im abgebildeten Ausführungsbeispiel ist der Rotor eine Förderschnecke mit einer schraubenförmigen Förderfläche 11, welche drehfest mit einer Rotorwelle 12 verbunden ist. Der Stator ist mit dem Gehäuseunterteil 4 fest verbunden. Der Stator beinhaltet im Wesentlichen an der Innenwand 14 des Gehäuseunterteils angeordnete, lamellenartige, parallel zueinander und zur Rotorwelle 12 angeordneten Längsrippen 13. Der Rotor ist im Gehäuse durch die Lagerung der Rotorwelle 12 im Lager 15 des Gehäuseoberteils 2 sowie durch den gleitenden Kontakt zwischen dem Aussenrand der schraubenförmigen Förderfläche 11 und den lamellenartigen Längsrippen 13 im Gehäuseunterteil 4, drehbar und axial verschiebbar geführt. Der Drehpfeil 16 am oberen Ende der Rotorwelle 12 zeigt den Drehsinn des Rotors im Betrieb der Dosiereinrichtung 1, wodurch in einem die schraubenförmige Förderfläche 11 umgebenden Dosiergut eine nach unten gerichtete Förderwirkung und damit eine gegen den elastischen Dosierkopf 9 beziehungsweise gegen den Auslass 10 gerichtete Kraft erzeugt wird, so dass sich der Auslass 10 öffnet und Dosiergut ausgetragen wird. Durch Variieren der Rotordrehzahl lässt sich die Austragsrate steuern und durch Stoppen des Rotors wird der Dosiervorgang beendet. Da die Rotorwelle 12 wie durch den Doppelpfeil 17 angedeutet, entlang ihrer Mittellängsachse A verschiebbar ist, kann einem Kolben ähnlich, auch Dosiergut mit einer stillstehenden Rotorwelle 12 aus dem Auslass 10 gepresst werden, wenn diese gegen den Auslass 10 hin geschoben wird. Diese vertikale Beweglichkeit kann in Verbindung mit einem geeigneten Antrieb, welcher nicht dargestellt ist, auch dazu benützt werden, der Drehbewegung des Rotors eine vertikale Vibration oder Schüttelbewegung zu überlagern, welche dem Auflocken des Dosierguts dient und der Verstopfung des Fördermittels mit pappigem Dosiergut entgegenwirkt.

Ferner ist im Bereich des Dosierkopfs 9 ein mechanisches Betätigungselement 18 mit der Rotorwelle 12 verbunden. Dieses mechanische Betätigungselement 18 wird dann eingesetzt, wenn sich der Dosierkopf 9 unter der Einwirkung des gegen den Auslass 10 hin geförderten Dosierguts zuwenig oder gar nicht öffnet.

Um den Auslass 10 beim Stoppen sofort zu entlasten, wodurch sich dieser schlagartig schliesst, kann vorzugsweise beim Stoppen entweder die Rotorwelle 12 in der entgegengesetzten Drehrichtung gedreht werden und/oder die Rotorwelle 12 vom Auslass 10 weg linear verschoben werden.

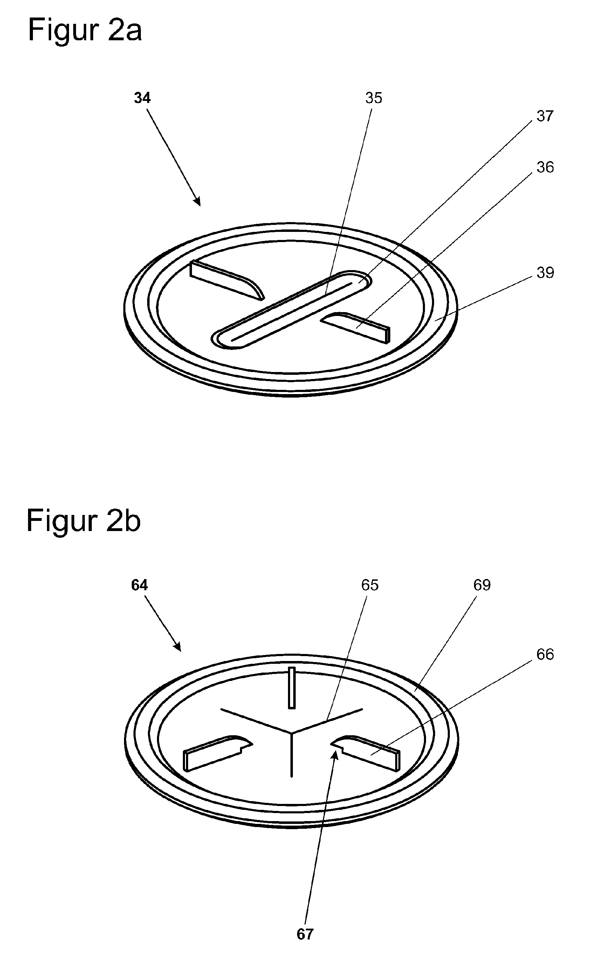

In Figur 2a ist eine erste Ausführungsform eines membranförmigen Dosierkopfs 34 mit einem schlitzförmig ausgebildeten Auslass 35 und mit zwei Versteifungsrippen 36 dargestellt. Wie bereits in der Beschreibung von Figur 1 erwähnt, wird der membranförmige Dosierkopf 34 von einem Ringwulst 39 in seiner flächigen Ausdehnung begrenzt. Die Versteifungsrippen 36 dienen einerseits dazu, den membranförmigen Dosierkopf 34 im Bereich des Auslasses zu versteifen, so dass ein unbeabsichtigtes Öffnen des Auslasses 35 vermieden werden kann. Andererseits können die Versteifungsrippen 36 auch als definierte Auflagestellen für das in Figur 1 dargestellte mechanische Betätigungselement dienen. Die Versteifungsrippen 36 können einstückig am Dosierkopf 34 ausgebildet sein. Sie können aber auch aus einem oder mehreren anderen, beispielsweise weniger elastischen Materialien bestehend mit dem Dosierkopf 34 verbunden sein. Ferner kann der membranförmige Dosierkopf 34 auch unterschiedliche Materialstärken aufweisen, wie dies mit der Vertiefung 37 angedeutet ist. Zudem kann der Dosierkopf 34 wie weiter oben erwähnt, auch aus Verbundwerkstoffen bestehen.

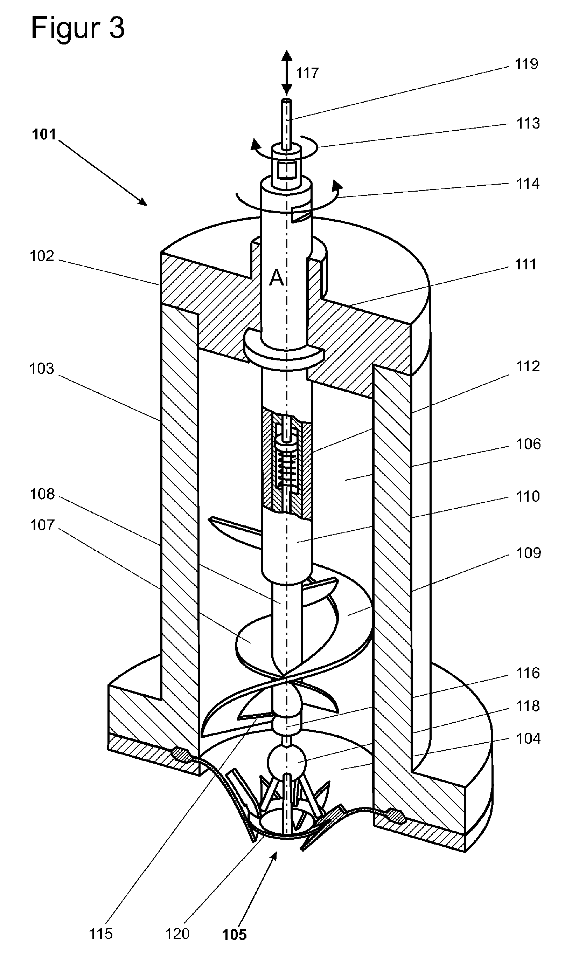

Die in Figur 2b dargestellte Ausführungsform eines membranförmigen Dosierkopfs 64 unterscheidet sich zur vorangehend beschriebenen Ausführungsform lediglich darin, dass an Stelle eines schlitzförmig ausgebildeten Auslasses ein aus drei sternförmig angeordneten Schlitzen gebildeter Auslass 65 vorhanden ist. Der Ringwulst 69 entspricht dem Ringwulst in der vorangehend beschriebenen Ausführung. Ferner ist der sternförmig ausgebildete Auslass 65 durch drei am Dosierkopf 64 ausgebildete Versteifungsrippen 66 versteift. Jede Versteifungsrippe 66 weist eine Ausnehmung 67 auf. Durch diese Ausnehmung 67 ist der Dosierkopf 64 mit dem in der Figur 3 dargestellten mechanischen Betätigungselement formschlüssig koppelbar. Dadurch kann mittels des Betätigungselements der Auslass 65 zwangsgesteuert werden.

Das Beispiel aus Figur 2b soll zeigen, dass die Ausgestaltung des Auslasses nicht auf einen schlitzförmigen Auslass begrenzt ist, sondern dass beliebig viele Schlitze ausgebildet werden können. Selbstverständlich kann der Ringwulst 69 in einer zur flächigen Ausdehnung des Dosierkopfs 64 orthogonalen Richtung beliebig hoch ausgebildet werden, wodurch topfförmig ausgebildete Dosierköpfe 64 geschaffen werden, welche ebenfalls in der erfindungsgemässen Dosiervorrichtung einsetzbar sind.

Zur Herstellung des Dosierkopfs können bekannte elastische Werkstoffe wie beispielsweise weiches PVC, PP, PE, Silikon, sowie synthetischer oder natürlicher Kautschuk verwendet werden. Ferner können auch weitere Materialien für den membranförmigen Dosierkopf verwendet werden, welche beispielsweise für einen Dosierkopf wie er in der EP 0 572 976 B1 offenbart wird, nicht geeignet sind. Ein membranförmiger Dosierkopf wäre beispielsweise auch aus den Materialien PTFE, hartes Polyethylen, POM oder sogar aus sehr dünnem Metall gefertigt, einsetzbar.

In Figur 3 wird eine Dosiervorrichtung 101 mit einem Innenrotor und einem Aussenrotor gezeigt. Man erkennt ein Gehäuseoberteil 102, ein Gehäuseunterteil 103 sowie einen Dosierkopf 104, welche zusammen einen Aufnahmeraum 106 für das Dosiergut umschliessen. Der Dosierkopf 104, dessen sternförmig ausgebildeter Auslass 105 geöffnet dargestellt ist, entspricht in seiner Ausgestaltung im Wesentlichen dem in Figur 2b dargestellten Dosierkopf.

Der Innenrotor ist eine Förderschnecke mit einer schraubenförmigen Förderfläche 107, welche mit der Innenrotorwelle 108 fest verbunden ist. Der Aussenrotor hat eine schraubenförmige Förderfläche 109, welche mit der Aussenrotorwelle 110 fest verbunden ist. Die Aussenrotorwelle 110 ist als Hohlwelle ausgebildet, welche sich im Gehäuseoberteil 102 in einem Lager 111 drehen kann. Die Innenrotorwelle 108 ist in der rohrförmig ausgebildeten Aussenrotorwelle 110 drehbar gelagert. In Figur 3 ist die Förderfläche 107 als Linksschraube und die Förderfläche 109 als Rechtsschraube dargestellt, das heisst, die Förderflächen 107 und 109 sind in ihrem Schraubenwindungssinn entgegengesetzt und werden daher zur Entfaltung ihrer Förderwirkung gegenläufig angetrieben, wie es durch die Drehpfeile 113 und 114 am obern Ende der Rotorwellen 108 und 110 angedeutet wird. Die Förderfläche 109 des Aussenrotors hat an ihrem unteren Ende einen gegen die Innenrotorwelle 108 einspringenden Fortsatz 115, welcher mit einem an der Innenrotorwelle 108 drehbar angeordneten Wellenlager 116 verbunden ist.

Auch die Innenrotorwelle 108 ist als Hohlwelle ausgebildet. In ihrem Innern ist eine Betätigungsstange 119 linear verschiebbar geführt. Am unteren Ende der Betätigungsstange 119 ist ein mechanisches Betätigungselement 118 angeordnet. Ein Kupplungsring 120 des Betätigungselements 118 greift in die in Figur 2b beschriebenen Ausnehmungen ein, so dass der Dosierkopf 104 mechanisch mit dem Betätigungselement 118 gekoppelt ist. Aus der Figur 3 ist klar ersichtlich, dass zumindest das Betätigungselement 118 nicht mit dem Innenrotor 108 mitdrehen kann, da sonst der Dosierkopf 104 oder zumindest dessen Versteifungsrippen zerstört würden. Durch die mit dem Doppelpfeil 117 angedeutete lineare Verschiebbarkeit der Betätigungsstange 119 und durch die Kopplung des Betätigungselementes 118 mit dem Dosierkopf 104, kann der Auslass 105 zwangsgesteuert werden.

Jedoch können der Kopplungsring 120 und die Versteifungsrippen auch derart ausgestaltet sein, dass zwischen dem Betätigungselement 118 und dem Dosierkopf 104 eine relative Drehbewegung erfolgen kann. Der Kopplungsring 120 selbst kann unterschiedliche Ausgestaltungen aufweisen, welche den Durchtritt von Dosiergut durch den Auslass 105 unterstützen. Beispielsweise kann der Kopplungsring 120 ein sägezahnartiges oder wellenförmiges Profil aufweisen. Sofern der Kopplungsring 120 zum Dosierkopf 104 drehbar angeordnet ist, wird das Profil des Kopplungsrings 120 beispielsweise durch die Versteifungsrippen abgegriffen, wodurch sich oszillierende Bewegungen im Bereich des Auslasses 105 am Dosierkopf 104 erzeugen lassen. Die einzelnen Verschlusslappen des sternförmig ausgebildeten Auslasses 105 müssen sich dabei nicht zwingend synchron in dieselbe Richtung bewegen.

Wie im Teilschnitt der Aussenrotorwelle 110 und der Innenrotorwelle 108 ersichtlich ist, kann zwischen der Betätigungsstange 119 und der Innenrotorwelle 108 eine Schliessfeder 112 derart angeordnet sein, dass diese Schliessfeder 112 eine in Schliessrichtung des Auslasses 105 wirkende Kraft auf die Betätigungsstange 119 ausübt. Durch die Schliessfeder 112 kann das selbstschliessende, elastische Verhalten des Dosierkopfs 104 unterstützt werden. Ferner kann mittels der Schliessfeder 112 eine höhere Sicherheit gegen unbeabsichtigtes Öffnen des Auslasses 105 erwirkt werden.

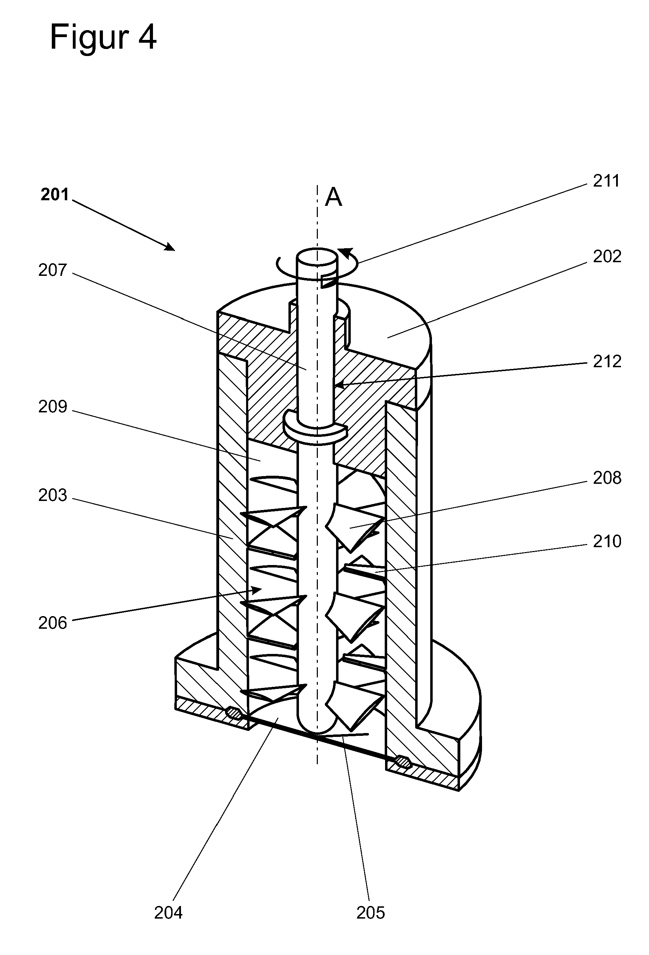

Figur 4 zeigt eine Dosiervorrichtung 201 mit einem Rotor und einem Stator. Das Gehäuse der Dosiervorrichtung 201 umfasst ein Gehäuseoberteil 202 und ein Gehäuseunterteil 203 sowie einen Dosierkopf 204 mit einem schlitzförmigen Auslass 205, welche zusammen einen Aufnahmeraum 206 für das Dosiergut umschliessen.

Der Rotor, bestehend aus einer Rotorwelle 207 mit Förderschaufeln 208, welche in ihrer Form und Anordnung mit Turbinenschaufelkränzen vergleichbar sind, ist im Gehäuse drehbar geführt und gleichzeitig in axialer Richtung durch die Lagerung der Rotorwelle 207 im Lager 212 des Gehäuseoberteils 202 gehalten. Der Stator besteht hier aus dem Gehäuseunterteil 203, welches an seiner Innenwand 209 mit radial nach innen gerichteten und ebenfalls in Form von mehreren Kränzen angeordneten Lenkflächen 210 versehen ist und zwar so, dass jeweils ein Kranz von Lenkflächen 210 in den Zwischenraum zwischen zwei Kränzen von Förderschaufeln 208 eingreift. Bei einer Drehung des Rotors kämmen somit die Förderschaufeln 208 durch die vertikalen Zwischenräume zwischen den Lenkflächen 210 des Stators. Durch die geneigte Stellung der Förderschaufeln 208 und der Lenkflächen 210 ergibt sich bei einer entsprechend gerichteten Drehung des Rotors wieder eine nach unten gerichtete Förderwirkung. Der Drehpfeil 211 am oberen Ende der Rotorwelle 207 zeigt den Drehsinn des Rotors im Betrieb der Dosiereinrichtung 201, wodurch das im Aufnahmeraum 206 befindliche Dosiergut eine nach unten gerichtete Förderwirkung erfährt und damit eine gegen den Dosierkopf 204 und gegen den Auslass 205 gerichtete Druckkraft im Innern des Dosierkopfes 204 erzeugt wird, so dass sich der Auslass 205 öffnet und Dosiergut ausgetragen wird. Durch Variieren der Rotordrehzahl lässt sich die Austragungsrate steuern und durch Stoppen des Rotors wird der Dosiervorgang beendet.

Obwohl die Erfindung durch die Darstellung spezifischer Ausführungsbeispiele beschrieben worden ist, ist es offensichtlich, dass zahlreiche weitere Ausführungsvarianten in Kenntnis der vorliegenden Erfindung geschaffen werden können, beispielsweise indem die Merkmale der einzelnen Ausführungsbeispiele miteinander kombiniert und/oder einzelne Funktionseinheiten der Ausführungsbeispiele ausgetauscht werden. Beispielsweise kann der in den Figuren 2 und 3 dargestellte Dosierkopf auch in einer Dosiervorrichtung gemäss der Figur 4 eingesetzt werden. Ferner sind weitere, erfindungsgemässe Ausgestaltungen des Dosierkopfes betreffend der Anordnung von Schlitzen und betreffend dem Einsatz verschiedener Materialien oder Materialkombinationen denkbar, ebenso wie verschiede Kopplungssysteme und -lösungen zwischen dem mechanischen Betätigungselement und dem Dosierkopf.

### Bezugszeichenliste

- 201, 101, 1: Dosiervorrichtung
- 202, 102, 2: Gehäuseoberteil
- 3: Oberer Teil der Aufnahmeraumes
- 203, 103, 4: Gehäuseunterteil
- 5: Unterer Teil der Aufnahmeraumes
- 7, 6: Verbindungsbereich
- 8: Dichtung
- 204, 104, 64, 34, 9: Dosierkopf
- 205, 105, 10: Auslass
- 109, 107, 11: Förderfläche, Förderschnecke
- 207, 12: Rotorwelle
- 13: Längsrippen, Lamellen
- 209, 14: Innenwand
- 212, 111, 15: Lager
- 211, 114, 113, 16: Drehpfeil
- 117, 17: Doppelpfeil
- 118, 18: mechanisches Betätigungselement
- 213, 69, 39, 19: Ringwulst
- 20: Haltering
- 66,36: Versteifungsrippe
- 37: Vertiefung
- 67: Ausnehmung
- 206, 106: Aufnahmeraum
- 108: Innenrotorwelle
- 110: Aussenrotorwelle
- 112: Schliessfeder
- 115: Fortsatz
- 116: Wellenlager
- 119: Betätigungsgestänge
- 120: Kopplungsring
- 208: Rotorförderschaufeln
- 210: Lenkflächen, Lamellen
- A: Mittellängsachse

## Patentansprüche

1. Dosiervorrichtung (1, 101, 201) für pulver- oder pastenförmiges Dosiergut, mit einem Gehäuse (2, 4, 102, 103, 202, 203), mit mindestens einem im Gehäuse ausgebildeten Aufnahmeraum (3, 5, 106, 206) zur Aufnahme von Dosiergut und mit mindestens einem, elastisches Material aufweisenden Dosierkopf (9, 34, 64, 104, 204), wobei der Dosierkopf (9, 34, 64, 104, 204) einen im unbelasteten Zustand den Aufnahmeraum (3, 5, 106, 206) gegen aussen dicht abschliessenden und sich unter Belastung öffnenden und variabel erweiternden Auslass (10, 105, 205) aufweist, **dadurch gekennzeichnet, dass** im Aufnahmeraum (3, 5, 106, 206) und/oder im Dosierkopf (9, 34, 64, 104, 204) mindestens ein mechanisches Fördermittel (11, 12, 13, 107, 108, 109, 110, 207, 208, 210) und/oder mindestens ein mechanisches Betätigungselement (18, 118) angeordnet ist, wobei durch das mindestens eine Fördermittel (11, 12, 13, 107, 108, 109, 110, 207, 208, 210) Dosiergut gegen den Auslass (10, 105, 205) hin förderbar und durch gegen den Auslass (10, 105, 205) hin gefördertes Dosiergut und/oder durch das mindestens eine mechanische Betätigungselement (18, 118) der Auslass (10, 105, 205) öffenbar ist.

2. Dosiervorrichtung (1, 101, 201) nach Anspruch 1, **dadurch gekennzeichnet, dass** der Auslass (10, 105, 205) im elastischen Material des Dosierkopfs (9, 34, 64, 104, 204) ausgebildet ist.

3. Dosiervorrichtung (1, 101, 201) nach Anspruch 2, **dadurch gekennzeichnet, dass** das elastische Material, in welchem der Auslass (10, 105, 205) ausgebildet ist, ein Verbundwerkstoff ist und/oder Partien mit unterschiedlichen Materialstärken aufweist.

4. Dosiervorrichtung (1, 201) nach einem der Ansprüche 1 bis 3, **dadurch gekennzeichnet, dass** das mindestens eine mechanische Betätigungselement (18) Teil des mindestens einen Fördermittels (11, 12) ist.

5. Dosiervorrichtung (1, 201) nach einem der Ansprüche 1 bis 4, **dadurch gekennzeichnet, dass** das mindestens eine Fördermittel einen Rotor (11, 12, 207, 208) und einen Stator (13, 210) aufweist.

6. Dosiervorrichtung (101) nach einem der Ansprüche 1 bis 4, **dadurch gekennzeichnet, dass** das mindestens eine Fördermittel einen Innenrotor (107, 108) und einen zum Innenrotor (107, 108) koaxial angeordneten Aussenrotor (109, 110) und gegebenenfalls einen Stator aufweist, wobei der Aussenrotor (109, 110) eine der Drehrichtung (113) des Innenrotors (107, 108) entgegen gesetzte Drehrichtung (114) aufweist.

7. Dosiervorrichtung (1, 101, 201) nach Anspruch 5 oder 6, **dadurch gekennzeichnet, dass** der Rotor (11, 12, 207, 208), gegebenenfalls der Innenrotor (107, 108) und/oder der Aussenrotor (109, 110) eine Förderschnecke (11, 107, 109) aufweisen oder zumindest einzelne Sektionen als Förderschnecke ausgebildet oder mit Schaufeln (208) bestückt sind.

8. Dosiervorrichtung (1, 101, 201) nach einem der Ansprüche 5 bis 7, **dadurch gekennzeichnet, dass** die Drehachse (12, 207) des Rotors (11, 12, 207, 208), gegebenenfalls die Drehachse (108) des Innenrotors (107, 108) und die Drehachse (110) des Aussenrotors (109, 110) auf der Mittellängsachse (A) des Dosierkopfs (9, 104, 204) und/oder des Aufnahmeraums (3, 5, 106, 206) angeordnet sind.

9. Dosiervorrichtung (1, 201) nach einem der Ansprüche 5 bis 8, **dadurch gekennzeichnet, dass** der Stator (13, 210) mit einer Innenwand (14, 209) des Aufnahmeraums (5, 206) und/oder Dosierkopfs (9, 104, 204) fest verbunden ist und mindestens eine Lamelle (13, 210) und/oder mindestens einen Vorsprung aufweist.

10. Dosiervorrichtung (1) nach Anspruch 9, **dadurch gekennzeichnet, dass** die mindestens eine Lamelle (13) in ihrer Längsausdehnung parallel zur Mittellängsachse (A) des Dosierkopfs (9) und/oder des Aufnahmeraums(3, 5) angeordnet ist.

11. Dosiervorrichtung (201) nach Anspruch 9, **dadurch gekennzeichnet, dass** die mindestens eine Lamelle (210) gewindegangförmig um die Mittellängsachse (A) des Dosierkopfs (204) und/oder des Aufnahmeraums (206) angeordnet ist.

12. Dosiervorrichtung (1, 201) nach einem der Ansprüche 1 bis 11, **dadurch gekennzeichnet, dass** die Auslassöffnung (10, 35, 205) in unbelastetem Zustand schlitzförmig ausgebildet ist.

13. Dosiervorrichtung (101) nach einem der Ansprüche 1 bis 11, **dadurch gekennzeichnet, dass** der Dosierkopf (64, 104) in unbelastetem Zustand eine sternförmig angeordnete Schlitze aufweisende Auslassöffnung (65, 105) beinhaltet.

14. Dosiervorrichtung (1, 101, 201) nach einem der Ansprüche 1 bis 13, **dadurch gekennzeichnet, dass** der Dosierkopf (9, 34, 64, 104, 204) Versteifungsrippen aufweist.

15. Dosiervorrichtung (1, 101, 201) nach einem der Ansprüche 1 bis 14, **dadurch gekennzeichnet, dass** das mechanische Betätigungselement (18, 118) entlang seiner Mittellängsachse (A) linear verschiebbar ist.

16. Dosiervorrichtung (1, 101, 201) nach einem der Ansprüche 4 bis 15, **dadurch gekennzeichnet, dass** der Rotor (11, 12) oder der Innenrotor (107, 108) oder der Aussenrotor (109, 110) entlang seiner Mittellängsachse (A) linear verschiebbar ist.
